(19) Europäisches Patentamt
European Patent Office
Office européen des brevets

(11) **EP 1 147 808 B1**

(12) **FASCICULE DE BREVET EUROPEEN**

(45) Date de publication et mention
de la délivrance du brevet:
**03.05.2006 Bulletin 2006/18**

(51) Int Cl.:
**B01J 8/02** *(2006.01)*    **B01J 8/04** *(2006.01)*
**B01J 19/32** *(2006.01)*

(21) Numéro de dépôt: **01400837.9**

(22) Date de dépôt: **02.04.2001**

(54) **Sous-ensemble polyfonctionnel assurant la mise en contact , la distribution de matière et l'échange de chaleur et/ou de matière d'au moins une phase gazeuse et d'au moins une phase liquide**

Mehrzweckige Teilmontage, die den Kontakt, die Verteilung und den Wärme- und/oder Materialaustausch in mindestens eine Gasphase sowie eine Flüssigphase sicherstellt

Multifunctional partial assembly which ensures the contact, distribution and heat and/or material exchange in at least one gaseous phase and one liquid phase

(84) Etats contractants désignés:
**DE ES IT NL**

(30) Priorité: **17.04.2000 FR 0005020**

(43) Date de publication de la demande:
**24.10.2001 Bulletin 2001/43**

(73) Titulaire: **Institut Français du Pétrole**
**92852 Rueil-Malmaison Cedex (FR)**

(72) Inventeurs:
• **Harter, Isabelle**
 **69003 Lyon (FR)**
• **Agoero, Robert**
 **38200 Vienne (FR)**
• **Gauthier, Thierry**
 **69530 Brignais (FR)**

(56) Documents cités:
 **US-A- 3 218 249**    **US-A- 4 140 625**
 **US-A- 5 232 283**

**Description**

La présente invention concerne un sous-ensemble polyfonctionnel, assurant la mise en contact, la distribution de matière et l'échange de chaleur et/ou de matière, permettant d'optimiser la distribution d'un fluide comportant au moins une phase gazeuse comprenant au moins en partie de l'hydrogène et au moins une phase liquide, pour une enceinte contenant au moins un lit de solides granulaires, ledit fluide circulant en écoulement globalement descendant à travers ledit lit de solides granulaires (ou particules solides). L'invention concerne en particulier l'application dudit sous-ensemble à la distribution d'un mélange biphasique ou polyphasique comportant au moins une phase gazeuse comprenant au moins en partie de l'hydrogène. L'invention concerne également une enceinte comportant à proximité de son extrémité supérieure une entrée d'un premier fluide liquide et d'un deuxième fluide gazeux, contenant au moins un lit de solides granulaires et en dessus dudit lit un sous-ensemble polyfonctionnel.

Ce sous-ensemble peut être disposé :

- soit en tête de l'enceinte qui est le plus souvent un réacteur

- soit en sortie d'un lit granulaire (alimentation sur toute la section de l'enceinte sur le lit granulaire suivant).

- soit après l'injection d'un fluide supplémentaire (par exemple un gaz de transfert de chaleur, souvent gaz de refroidissement dit gaz de quench selon la dénomination anglaise ou un gaz pour la mise en oeuvre d'une réaction telle que par exemple une réaction d'hydrogénation).

La présente invention s'applique particulièrement bien dans le domaine des distributeurs gaz/liquide où la phase gazeuse est composée en partie d'hydrogène. La présente invention trouve en particulier une application dans tous les cas :

- où la phase gazeuse est largement majoritaire par rapport à la phase liquide c'est-à-dire où le rapport volumique entre le gaz et le liquide est souvent supérieur à 3 : 1 et habituellement inférieur à

$$400 : 1 \ (3 < \frac{Gaz \ vol}{Liquide \ vol} < 400)$$

- où la réaction est fortement exothermique et nécessite l'introduction dans le réacteur d'un fluide (qui est souvent un gaz) supplémentaire pour refroidir le mélange gaz/liquide,

- où la réaction nécessite un contact étroit pour permettre la dissolution d'un composé (par exemple de

l'hydrogène H$_2$) dans la phase liquide.

La présente invention trouve en particulier une application dans toutes les réactions d'hydrocraquage, d'hydrotraitement, d'hydrodésulfuration, d'hydrodésazotation, d'hydrogénations totales et sélectives, et/ou l'hydrodémétallation des coupes liquide mais également pour les réactions d'oxydations partielles ou totales, les réactions d'amination d'acétyloxydation, d'ammoxydation et d'halogénation comme par exemple de chloration.

Dans le domaine spécifique des réactions d'hydrodésulfuration, d'hydrodéazotation, d'hydrocraquage pour atteindre des conversions poussées (pour obtenir un produit contenant par exemple 30 ppm (parties par million) de soufre ou moins, il est nécessaire d'avoir une bonne distribution du gaz et du liquide mais principalement du liquide sachant que l'on se situe avec des rapports volumétriques qui varient en général d'environ 3 : 1 à environ 400 : 1 et le plus souvent d'environ 10 : 1 à environ 200 : 1 et dans le cas de l'utilisation d'un Quench un très bon contact entre le gaz introduit pour effectuer le refroidissement et les fluides du procédé mis en oeuvre souvent dénommés fluides process.

Compte tenu de la faible proportion de liquide par rapport au gaz, une des possibilités utilisée dans l'art antérieur consiste par exemple à utiliser des plateaux distributeurs comportant une pluralité de trous dédiés au passage du liquide et une pluralité de cheminées dédiées au passage du gaz. On trouvera par exemple des descriptions de tels dispositifs dans les brevets US 3,353,924, US 4,385,033, US 3,855,068.

Ces solutions posent cependant des problèmes en termes de souplesse d'utilisation des plateaux, et peuvent également conduire à des irrégularités d'alimentation des différents orifices en cas de non horizontalité parfaite des plateaux et/ou des remous suscités par la chute_massive des flux liquide et gazeux sur les plateaux.

Pour pallier ces inconvénients, l'homme de l'art est conduit à utiliser un agencement spécifique de plusieurs plateaux dont le dernier est soit pourvus de moyens de collecte et de distribution des phases liquide et gazeuse sous forme séparée tel que décrit par exemple dans le brevet US 5,232,283 ou soit sous forme de mélange tel que décrit par exemple dans les brevets US 4,126,539, US 4,126,540, US 4,836,989, US 5,462,719.

Un autre inconvénient de ce type de plateaux et d'agencement est l'absence de diffusion du liquide en sortie des cheminées ou des trous. L'homme du métier est alors conduit à augmenter considérablement le nombre de points d'injection tel que cela est en particulier précisé dans le brevets FR 2,745,202 et le brevet US 5,688,445 en étant toutefois limité par la tenue mécanique du plateau où à utiliser des systèmes type brise jet en sortie d'orifices ou de cheminées comme cela est par exemple décrit dans les documents de brevets FR 2,654,952, wo9535159 et wo9746303.

En outre dans le cas de réactions exothermiques nécessitant le refroidissement par l'intermédiaire d'un fluide supplémentaire habituellement gazeux mais éventuellement liquide les systèmes proposés comportent généralement la succession d'internes suivants : une introduction du fluide de quench, une boîte de mélange destinée à refroidir et homogénéiser les fluides du procédé et un système de doubles plateaux de distribution tel que par exemple l'un de ceux décrit dans les documents de brevets US 4,836,989, US 5.232, 283, US 5,462,719, US 5,567,396 et EP 716881), la différence entre les diverses solutions proposées dans ces brevets provenant essentiellement de la complexité des boîtes de mélange utilisée (double boite, pâles, chicanes).

L'inconvénient majeur de ces systèmes, outre la qualité de la distribution qui n'est pas optimale, est l'encombrement (place prise dans le réacteur). Dans les systèmes de l'art antérieur la vitesse du gaz dans les cheminées varie généralement de 0.5 à 5 centimètres par seconde (cm/s) et la vitesse du liquide varie généralement de 0.05 à 1 cm/s. Ces vitesses sont trop faibles pour permettre à la fois le mélange et la dispersion ce qui est également un inconvénient majeur. La présente invention a pour but de pallier au moins partiellement aux inconvénients des solutions proposées dans l'art antérieur et également :

- d'assurer une distribution optimum du gaz et du liquide sur toute la surface sous forme de brouillard (spray selon la dénomination anglaise) ou de fins films liquide en diminuant le nombre de points d'injection,

- de réaliser un contact efficace entre le gaz et le liquide en vue d'assurer un échange thermique correct (fonction Quench) ou un échange de matière (dissolution d'hydrogène par exemple dans la phase liquide),

- de minimiser l'encombrement dans le réacteur (utilisation d'un seul plateau pour la réalisation de toutes les fonctions décrites ci dessus).

La présente invention concerne un sous-ensemble polyfonctionnel, assurant la mise en contact, la distribution de matière et l'échange de chaleur et/ou de matière, d'au moins une phase gazeuse comprenant au moins en partie de l'hydrogène et d'au moins une phase liquide, pour une enceinte contenant au moins un lit de solides granulaires, lesdites phases étant en écoulement globalement descendant dans ladite enceinte et traversant ledit lit de solides granulaires, ledit sous-ensemble comportant au moins un plateau distributeur (P) situé au-dessus d'un desdits lits de solides granulaires, ledit plateau comportant une pluralité de cheminées ou tubes (1) surmontée chacune d'au moins un élément brise jet et ayant chacune dans sa partie supérieure au moins une section de passage (22) pour l'entrée de la majeure partie de ladite phase gazeuse dans ladite cheminée et entre ladite partie supérieure et la partie inférieure de ladite cheminée au-dessus dudit plateau distributeur (P) au moins une section de passage (2) pour l'entrée de la majeure partie de ladite phase liquide dans ladite cheminée et dans sa partie inférieure au moins une section de passage (23) du mélange biphasique ou polyphasique formé dans ladite cheminée et sa distribution sur le lit de solides granulaires situé en dessous de ladite partie inférieure, ledit sous-ensemble étant caractérisé en ce que chaque cheminée contient entre sa partie supérieure et sa partie inférieure au moins un garnissage constitué d'au moins un élément dont la section de passage est essentiellement transversale à l'axe de la cheminée, cet élément s'étendant suivant toute la section transversale de la cheminée dans la zone de circulation et étant constitué de cellules à travers lesquelles passent ladite phase liquide et ladite phase gazeuse, ces cellules orientant de façon sensiblement radiale la circulation des fluides à l'intérieur de ladite cheminée.

En d'autres termes ledit sous-ensemble fait partie d'un dispositif pour distribuer un mélange comportant au moins une phase gazeuse et au moins une phase liquide ledit mélange s'écoulant de manière descendante à travers un lit de solides granulaires et provenant soit de la canalisation d'entrée réacteur, soit du lit de solides granulaires supérieur.

Chaque cheminée ou tube comporte au moins deux sections de passage (2) de la phase liquide situées à des niveaux différents au-dessus du plateau distributeur (P) et en dessous de la section de passage (22) la plus proche dudit plateau distributeur (P). Ces passages sont par exemple des trous percés dans la périphérie et sur plusieurs niveaux de préférence 2 ou 3 niveaux ; le nombre de trous et leur diamètre étant calculé de façon à obtenir la souplesse désirée. Les trous ont une forme quelconque par exemple sensiblement circulaire. Ces passages (2) peuvent aussi être des fentes percées dans la des cheminées ou tubes (1) sur leur hauteur, leur largeur et leur nombre, de préférence deux ou trois, étant calculés de façon à obtenir la souplesse désirée. La section de passage (2) de la phase liquide la plus proche du plateau distributeur (P) est située à une distance suffisante dudit plateau (P) pour qu'un niveau de liquide s'établisse au-dessus dudit plateau (P). Ces chemmées ou tubes (1) sont surmontés en leur partie supérieure de chapeaux (brise jet) destinés à briser les jets provenant soit de la canalisation d'entrée soit du lit de solides granulaire supérieur et à permettre la séparation du gaz et du liquide. Le liquide entre dans le tube par les trous ou fentes et le gaz par la partie supérieure par la section de passage (22) entre le chapeau et le haut de la cheminée ou tube (1).

L'utilisation d'un garnissage à l'intérieur des cheminées ou tubes (1) permet de donner de l'énergie au mélange gaz/liquide et d'obtenir une vitesse importante dans la cheminée ou tube (1). Le garnissage employé est par exemple un garnissage de type Sulzer et en particulier ceux connus sous la référence SMV ou SMX ou ceux de la société Koch-Glitsch comme par exemple celui connu sous la référence RMT ou l'un de ceux décrits dans les brevets de ces sociétés concernant les mélangeurs statiques ou les garnissages de colonne ou un garnissage tel que défini dans le brevet EP 719 850. Ces garnissages sont caractérisés par le fait qu'ils sont constitués d'au moins un élément dont la section de passage est essentiellement transversale à l'axe de l'enceinte, cet élément s'étendant suivant toute la section transversale de l'enceinte dans la zone de circulation et étant constitué de cellules à travers lesquelles passent le liquide du procédé (liquide process), le gaz du procédé (gaz process) et éventuellement le fluide de quench, ces cellules orientant de façon sensiblement radiale la circulation des fluides à l'intérieur de la cheminée. Ce garnissage permet un très bon contact entre le gaz et le liquide et favorise les échanges de température (fonction Quench) et/ou de matière (fonction dissolution).

Selon un mode de réalisation de la présente invention le sous-ensemble comprend à proximité de la section de passage (23) de la partie inférieure de chaque cheminée au moins un moyen assurant la dispersion du mélange biphasique ou polyphasique formé dans ladite cheminée.

Selon un mode de réalisation de la présente invention chaque cheminée contient au moins deux garnissages non contigus le dernier garnissage, situé à proximité de la section de passage (23) de la partie inférieure de chaque cheminée, assurant ladite fonction de dispersion du mélange biphasique ou polyphasique formé dans ladite cheminée. Dans une forme particulière de réalisation de la présente invention le dernier garnissage, situé à proximité de la section de passage (23) de la partie inférieure de chaque cheminée assurant ladite fonction de dispersion du mélange biphasique ou polyphasique formé dans ladite cheminée, comporte une partie interne à la cheminée et une partie externe à ladite cheminée.

Selon un autre mode de réalisation de la présente invention le moyen assurant la dispersion du mélange biphasique ou polyphasique formé dans la cheminée est un brise jet à porosité contrôlée situé en dessous et à proximité de la section de passage (23) de la partie inférieure de ladite cheminée. Dans le cadre de la présente invention chaque cheminée peut comporter un brise jet individuel ou on utilisera un brise jet pour un ensemble de cheminée voir un brise jet s'étendant sur toute la section de l'enceinte.

Souvent la cheminée comporte une partie en dessus du plateau distributeur (P) et une partie en dessous du plateau distributeur (P). En d'autres termes les tubes dépassent de la base du plateau.

Lorsque le moyen assurant la dispersion du mélange biphasique ou polyphasique formé dans ladite cheminée est un garnissage celui-ci est de préférence choisit parmi les garnissages ayant des angles spécifiques pour créer la diffusion désirée (réalisation de l'arrosage de la surface sous forme de spray). Les angles de diffusion varient habituellement de 10 à 60°, le fonctionnement préféré étant l'obtention d'un angle de diffusion de l'ordre de 30°. Lorsque le moyen assurant la dispersion du mélange biphasique ou polyphasique formé dans ladite cheminée est un brise jet celui-ci est de préférence un brise jet spécifique avec une porosité contrôlée et dépendante des flux gazeux et liquide (réalisation de l'arrosage de la surface du lit de solides granulaires sous forme de film liquide) La porosité, exprimée en rapport de surface (surface vide/surface totale du brise jet) varie de à 50 % de la surface du brise jet de préférence de 10 à 20 % de la surface du brise jet.

Les avantages du dispositif de la présente invention sont les suivants :

-    diminution du nombre de point d'injection. La densité de cheminée au mètre carré est habituellement comprise entre 1 et 150 de préférence entre 10 et 50,

-    distribution fine du liquide sur toute la surface dans le cas de rapport gaz/liquide important (difficulté à distribuer peu de liquide) Augmentation importante de l'angle de diffusion par l'emploi système de diffuseur (brise jet ou garnissage spécifique) en sortie de cheminée Dans les systèmes de l'art antérieur l'angle de diffusion est quasi nul,

-    intégration de la fonction quench : amélioration de l'efficacité du transfert de chaleur,

-    gain de place important (suppression de l'ensemble Quench),

-    intégration de la fonction dissolution à différents niveaux dans le réacteur,

-    souplesse et robustesse du système.

L'invention concerne également une enceinte, comportant à proximité de son extrémité supérieure une entrée d'un premier fluide liquide et d'un deuxième fluide gazeux, contenant au moins un lit de solides granulaires et en dessus dudit lit un sous-ensemble tel que défini ci-devant ladite enceinte comportant au-dessus dudit sous-ensemble au moins une entrée latérale d'un troisième fluide, de préférence gazeux, identique ou différent dudit premier ou deuxième fluide. Souvent ledit troisième fluide est un fluide d'échange de chaleur et/ou de matière avec au moins l'un desdits premier ou deuxième fluide. Cette enceinte est habituellement utilisée pour la réalisation de réaction catalytique dans laquelle le (ou les lits) de solides granulaires est un lit de catalyseur et en particulier pour la réalisation de réaction catalytique dont l'un des réactifs est l'hydrogène. D'autres avantages et caractéristiques de l'invention apparaîtront mieux à la lecture de la description donnée ci-après à titre d'exemples de réalisation, en se référant aux dessins annexés où :

- la figure 1 montre le principe d'une réalisation selon l'art antérieur telle que par exemple celui donné dans le brevet FR 2.745,202 du demandeur.

- la figure 2 schématise un sous-ensemble selon la présente invention comportant un garnissage à l'intérieur de la cheminée,

- les figures 3 et 4 schématisent deux cas de réalisation d'un sous-ensemble comportant un moyen de dispersion du mélange biphasique ou polyphasique formé dans la cheminée,

- les figures 5a et 5b représentent schématiquement une enceinte contenant dans le cas de la figure 5a un dispositif de distribution selon l'art antérieur (voir par exemple le brevet US 5,232,283) comportant une boite de mélange pour assurer la fonction de quench et dans le cas de la figure 5b un sous-ensemble selon la présente invention,

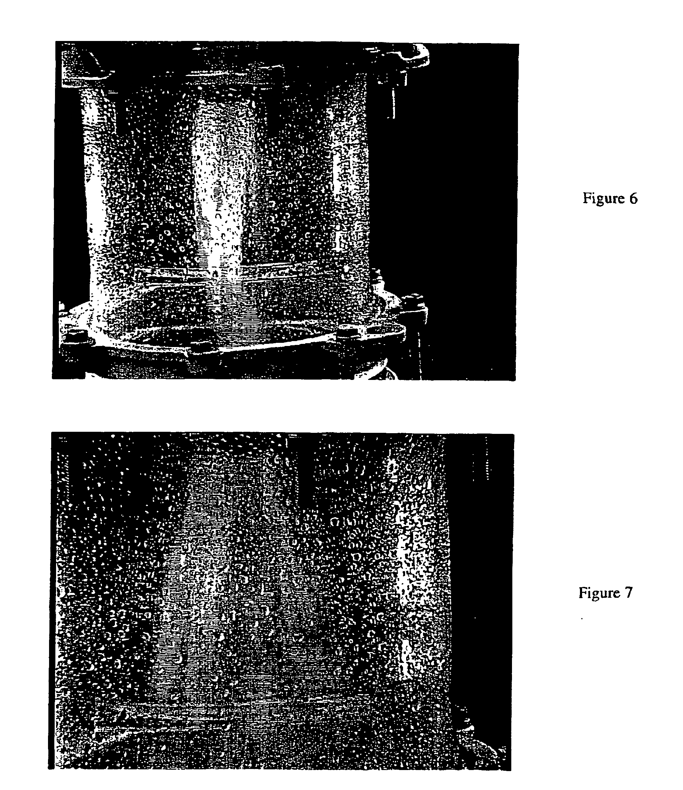

- la figure 6 est une photo prise lors de la réalisation d'essais sur une maquette comportant en dessous du dispositif de distribution de l'art antérieur une partie transparente en plexiglas montrant la faible dispersion obtenu par l'utilisation d'un tel dispositif,

- la figure 7 est une photo prise lors de la réalisation d'essais sur une maquette comportant en dessous du sous-ensemble selon la présente invention la nette amélioration de l'angle de dispersion que l'on obtient dans le cas ou la cheminée comporte un seul garnissage comme décrit en liaison avec la figure 2.

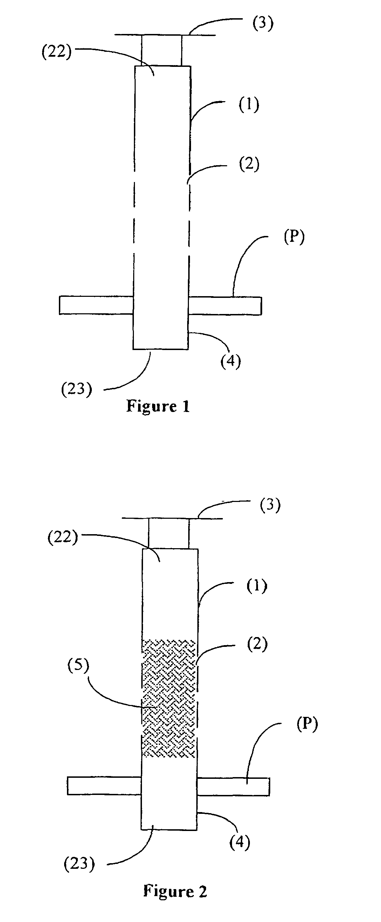

La figure 1 schématise une partie d'un dispositif de l'art antérieur comportant des tubes (1) percés de trous (2) en leur périphérie et sur plusieurs niveaux ; le nombre de trous et leur diamètre est calculé en fonction de la souplesse désirée. Un niveau liquide s'établit. Sa hauteur varie généralement de 50 à 200 mm La hauteur des cheminées est le plus souvent comprise entre 100 et 500 mm de préférence entre 250 et 450 mm. Ces tubes sont surmontés en leur partie supérieure de chapeaux (3) (brise jet) destinés à briser les jets provenant soit de la canalisation d'entrée soit du lit de solides granulaire supérieur et à permettre la séparation du gaz et du liquide. Les tubes dépassent (4) de la base du plateau (P) d'une hauteur qui varie habituellement entre 20 et 100 mm. Le liquide pénètre dans le tube par les trous et le gaz par la partie supérieure (22). En sortie (23) de cheminée on a un jet de mélange biphasique au plus égal au diamètre de la cheminée

La figure 2 schématise une partie d'un sous-ensemble selon la présente invention comportant des tubes (1) percés de trous (2) en leur périphérie et sur deux niveaux ; le nombre de trous et leur diamètre est calculé en fonction de la souplesse désirée. Un niveau liquide s'établit. Sa hauteur varie généralement de 50 à 200 mm. La hauteur des cheminées est habituellement comprise entre 100 et 500 mm de préférence entre 250 et 450 mm. Ces tubes sont surmontés en leur partie supérieure de chapeaux (3) (brise jet) destinés à briser les jets provenant soit de la canalisation d'entrée soit du lit de solides granulaire supérieur et à permettre la séparation du gaz et du liquide. Les tubes dépassent (4) de la base du plateau (P) d'une hauteur qui varie entre 10 et 100 mm de préférence d'environ 20 à environ 50 mm. Le liquide pénètre dans le tube par les trous (2) et le gaz par la partie supérieure (22). L'intérieur de la cheminée est rempli sur une hauteur supérieure à la distance entre le trou (2) le plus proche du plateau (P) et le trou (2) le plus éloigné de ce plateau (P) d'un garnissage (5) de type Sulzer vendu sous la référence SMV. Ce garnissage est caractérisé par le fait qu'il est constitué d'au moins un élément dont la section de passage est essentiellement transversale à l'axe de l'enceinte, cet élément s'étendant suivant toute la section transversale de l'enceinte dans la zone de circulation et étant constitué de cellules à travers lesquelles passent le liquide process, le gaz process et le fluide de quench, ces cellules orientant de façon sensiblement radiale la circulation des fluides. Le mélange biphasique formé dans le tube (1) sort par l'extrémité inférieure (23) de ce tube.

La fonction de ce garnissage est double :

- réalisation d'un spray de gouttelettes liquide qui permettra ensuite un meilleur arrosage de la surface catalytique,

- dans le cas où un gaz supplémentaire est introduit deux fonctions supplémentaires sont réalisées : échange de matière d'une phase envers l'autre (gaz/gaz, gaz/liquide), échange de chaleur entre une phase et les deux phases process (gaz/gaz process, gaz liquide/process).

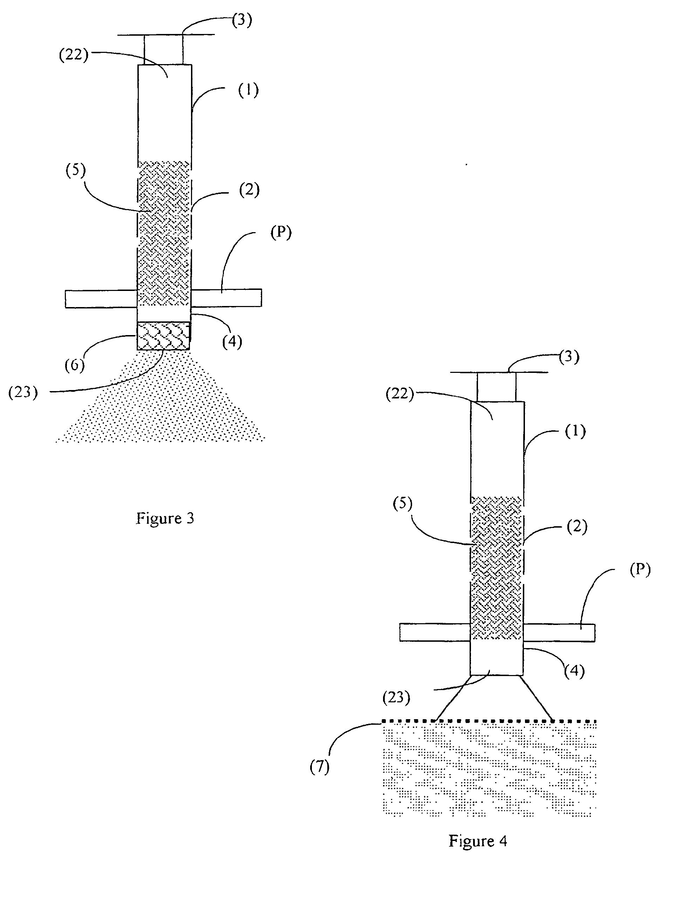

Les figures 3 et 4 schématisent une partie d'un sous-ensemble selon la présente invention comportant un moyen supplémentaire situé à proximité de l'extrémité inférieure du tube (1) ayant pour but d'augmenter la dispersion du mélange gaz/liquide en sortie de cheminée pour arroser une plus grande surface catalytique.

Selon le schéma de principe de la figure 3 ce moyen supplémentaire est un garnissage (6)avec des angles spécifiques pour créer la dispersion désirée (réalisation de l'arrosage de la surface sous forme de spray). Les angles de dispersion varient de 10 à 60°, le fonctionnement préféré étant de l'ordre de 30°. Ce garnissage est situé sur une hauteur de l'ordre de 50 mm et dépasse d'environ 20 mm sous l'extrémité du tube (1). Les autres éléments sont identiques à ceux décrits en liaison avec la figure 2.

Selon le schéma de principe de la figure 4 ce moyen supplémentaire est un brise jet spécifique (7) avec une porosité contrôlée et dépendante des flux gazeux et liquide (réalisation de l'arrosage de la surface sous forme de film liquide). La porosité varie de 5 à 50 % de préférence de 10 à 20 %. La distance entre le bas de la cheminée et le brise jet est compris entre 10 et 200 mm de préférence de l'ordre de 50 à 100 mm. Les autres éléments sont identiques à ceux décrits en liaison avec la figure 2.

La figure 5a schématise un réacteur catalytique contenant plusieurs lits (56) de catalyseur comportant un diffuseur de tête (51), un plateau double étage (52) pour assurer une distribution correcte du gaz et du liquide , un lit catalytique (56), un tube (53) d'introduction d'une phase supplémentaire (gazeuse ou liquide) une boite de mélange (54) pour assurer la fonction Quench ou transfert de matière et de nouveau un plateau distributeur double passe pour redistribuer de façon correcte le mélange gaz/liquide. Cet ensemble occupe au minimum 20 % volume du réacteur.

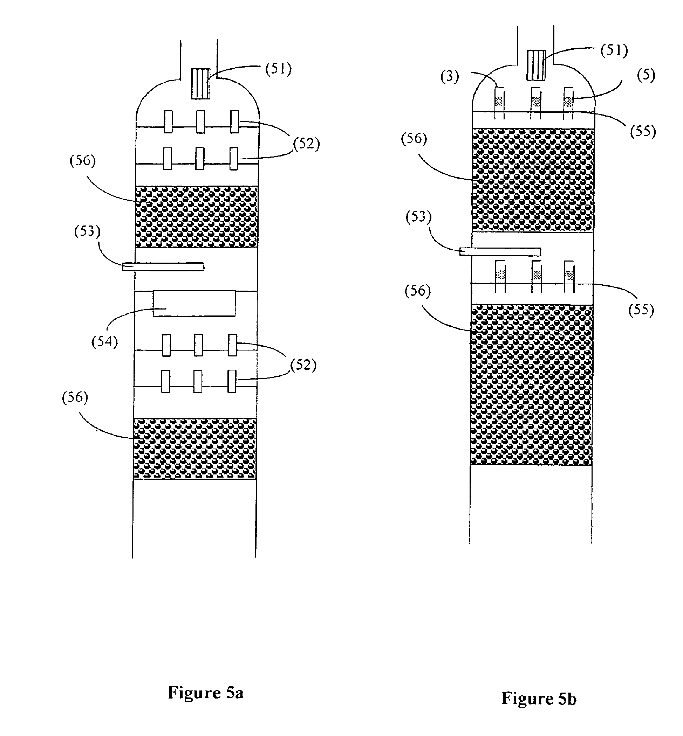

La figure 5b schématise une enceinte contenant plusieurs lits de catalyseur contenant un sous-ensemble selon la présente invention qui permet outre d'améliorer la distribution (augmentation de l'effet spray) de minimiser la place prise par les internes dans le réacteur (suppression du plateau double passe- suppression de la boîte de mélange) Les éléments désignés par les même numéros de référence que ceux notés sur les schémas des figures 2 et 5a sont identiques à ceux décrits en liaison avec ces figures. Le brise jet (3) a une géométrie différente de celle schématisée en liaison avec la figure 2. Ce brise jet est un déflecteur fixé sur le tube (1) qui comporte une entrée en biseau depuis le haut vers le bas du tube (1).

**Revendications**

1. Sous-ensemble polyfonctionnel, assurant la mise en contact, la distribution de matière et l'échange de chaleur et/ou de matière, d'au moins une phase gazeuse comprenant au moins en partie de l'hydrogène et d'au moins une phase liquide, pour une enceinte contenant au moins un lit de solides granulaires, lesdites phases étant en écoulement globalement descendant dans ladite enceinte et traversant ledit lit de solides granulaires, ledit sous-ensemble comportant au moins un plateau distributeur (P) situé au-dessus d'un desdits lits de solides granulaires, ledit plateau comportant une pluralité de cheminées (1) surmontée chacune d'au moins un élément brise jet et ayant chacune dans sa partie supérieure au moins une section de passage (22) pour l'entrée de la majeure partie de ladite phase gazeuse dans ladite cheminée et entre ladite partie supérieure et la partie inférieure de ladite cheminée au-dessus dudit plateau distributeur (P) au moins une section de passage (2) pour l'entrée de la majeure partie de ladite phase liquide dans ladite cheminée et dans sa partie inférieure au moins une section de passage (23) du mélange biphasique ou polyphasique formé dans ladite cheminée et sa distribution sur le lit de solides granulaires situé en dessous de ladite partie inférieure, ledit sous-ensemble étant **caractérisé en ce que** chaque cheminée contient entre sa partie supérieure et sa partie inférieure au moins un garnissage constitué d'au moins un élément dont la section de passage est essentiellement transversale à l'axe de la cheminée, cet élément s'étendant suivant toute la section transversale de la cheminée dans la zone de circulation et étant constitué de cellules à travers lesquelles passent ladite phase liquide et ladite phase gazeuse, ces cellules orientant de façon sensiblement radiale la circulation des fluides à l'intérieur de ladite cheminée.

2. Sous-ensemble selon la revendication 1 comprenant à proximité de la section de passage (23) de la partie inférieure de chaque cheminée au moins un moyen assurant la dispersion du mélange hiphasique ou polyphasique formé dans ladite cheminée.

3. Sous-ensemble selon la revendication 2 dans lequel chaque cheminée contient au moins deux garnissages non contigus le dernier garnissage, situé à proximité de la section de passage (23) de la partie inférieure de chaque cheminée, assurant ladite fonction de dispersion du mélange biphasique ou polyphasique formé dans ladite cheminée.

4. 4.Sous-ensemble selon la revendication 3 dans lequel le dernier garnissage, situé à proximité de la section de passage (23) de la partie inférieure de chaque cheminée assurant ladite fonction de dispersion du mélange biphasique ou polyphasique formé dans ladite cheminée, comporte une partie interne à la cheminée et une partie externe à ladite cheminée.

5. Sous-ensemble selon la revendication 2 dans lequel le moyen assurant la dispersion du mélange biphasique ou polyphasique formé dans la cheminée est un brise jet à porosité contrôlée situé en dessous et à proximité de la section de passage (23) de la partie inférieure de ladite cheminée.

6. Sous-ensemble selon l'une des revendications 1 à 5 dans lequel la cheminée comporte au moins deux sections de passage (2) de la phase liquide situées à des niveaux différents au-dessus du plateau distributeur (P) et en dessous de la section de passage (22) la plus proche dudit plateau distributeur (P).

7. Sous-ensemble selon l'une des revendications 1 à 6 dans lequel les sections de passages de la phase liquide sont des trous de forme quelconque et/ou des fentes.

**8.** Sous-ensemble selon l'une des revendications 1 à 7 dans lequel la section de passage (2) de la phase liquide la plus proche du plateau distributeur (P) est située à une distance suffisante dudit plateau (P) pour qu'un niveau de liquide s'établisse au-dessus dudit plateau (P).

**9.** Sous-ensemble selon l'une des revendications 1 à 8 dans lequel la cheminée comporte une partie en dessus du plateau distributeur (P) et une partie en dessous du plateau distributeur (P).

**10.** Enceinte, comportant à proximité de son extrémité supérieure une entrée d'un premier fluide liquide et d'un deuxième fluide gazeux, contenant au moins un lit de solides granulaires et en dessus dudit lit un sous-ensemble selon l'une des revendications 1 à 9 **caractérisée en ce qu'**elle comporte au-dessus dudit sous-ensemble au moins une entrée latérale d'un troisième fluide de préférence gazeux identique ou différent dudit premier ou deuxième fluide.

**11.** Enceinte selon la revendication 10 dans lequel ledit troisième fluide est un fluide d'échange de chaleur et/ou de matière avec au moins l'un desdits premier ou deuxième fluide.

**12.** Enceinte selon la revendication 10 ou 11 pour la réalisation de réaction catalytique dans laquelle le (ou les lits) de solides granulaires est un lit de catalyseur.

**13.** Enceinte selon l'une des revendications 10 à 14 pour la réalisation de réaction catalytique dont l'un des réactifs est l'hydrogène.

**Patentansprüche**

**1.** Polyfunktionales Modul, das die Kontaktierung, die Distribution von Material und den Austausch von Wärme und/oder von Material von mindestens einer gasförmigen Phase, die mindestens zum Teil Wasserstoff umfasst, und von mindestens einer flüssigen Phase gewährleistet, für ein Gehäuse, das mindestens ein Granulat-Festbett enthält, wobei die Phasen in dem Gehäuse allgemein im Abwärtstrom fließen und das Granulat-Festbett durchqueren, wobei das Modul mindestens einen Verteilerteller (P) umfasst, der über einem der Granulat-Festbetten liegt, wobei der Teller mehrere Kamine (1) enthält, die jeweils von mindestens einem Strahlverteiler überwölbt sind und die jeweils in ihrem oberen Teil mindestens einen Strömungsabschnitt (22) für den Eintritt des größten Teils der gasförmigen Phase in den Kamin und zwischen dem oberen Teil und dem unteren Teil des Kamins über dem Verteilerteller (P) mindestens einen Strömungsabschnitt (2) zum Eintritt des größten Teils der flüssigen Phase in den Kamin aufweisen, und in ihrem unteren Teil mindestens einen Strömungsabschnitt (23) zur zwei- oder mehrphasigen Mischung, die in dem Kamin gebildet wird, und deren Verteilung auf dem Granulat-Festbett, das unter dem unteren Teil liegt, wobei das Modul **dadurch gekennzeichnet ist, dass** jeder Kamin zwischen seinem oberen und seinem unteren Teil mindestens eine Füllung enthält, die aus mindestens einem Element besteht, dessen Strömungsabschnitt im Wesentlichen quer zur Kaminachse steht, wobei sich dieses Element dem ganzen Querschnitt des Kamins folgend in dem Zirkulationsbereich ausdehnt, bestehend aus Zellen, die die flüssige Phase und die gasförmige Phase durchqueren, wobei die Zellen die Zirkulation der Flüssigkeiten im Innern des Kamins deutlich auf radiale Weise orientieren.

**2.** Modul nach Anspruch 1, das nahe des Strömungsabschnitts (23) des unteren Teils eines jeden Kamins mindestens ein Mittel umfasst, das die Dispersion der zwei- oder mehrphasigen Mischung gewährleistet, die in dem Kamin gebildet wird.

**3.** Modul nach Anspruch 2, bei dem jeder Kamin mindestens zwei nicht angrenzende Füllungen enthält, wobei die letzte Füllung, in der Nähe des Strömungsabschnitts (23) des unteren Teils eines jeden Kamins liegt, die die Dispersionsfunktion der zwei- oder mehrphasigen Mischung gewährleistet, die in dem Kamin gebildet wird.

**4.** Modul nach Anspruch 3, bei dem die letzte Füllung, die nahe dem Strömungsabschnitt (23) des unteren Teils eines jeden Kamins liegt, die die Dispersionsfunktion der zwei- oder mehrphasigen Mischung gewährleistet, die in dem Kamin gebildet wird, einen Teil im Innern des Kamins und einen Teil außerhalb dieses Kamins umfasst.

**5.** Modul nach Anspruch 2, bei dem das Mittel, das die Dispersion der zwei- oder mehrphasigen Mischung gewährleistet, die in dem Kamin gebildet wird, ein Strahlverteiler mit einer kontrollierten Porosität ist, der unter und nahe dem Strömungsabschnitt (23) des unteren Teils des Kamins liegt.

**6.** Modul nach einem der Ansprüche 1 bis 5, bei dem der Kamin mindestens zwei Strömungsabschnitte (2) der flüssigen Phase umfasst, die auf verschiedenen Ebenen über dem Verteilerteller (P) und unter dem Strömungsabschnitt (22), so nah wie möglich am genannten Verteilerteller (P), liegen.

**7.** Modul nach einem der Ansprüche 1 bis 6, bei dem die Strömungsabschnitte der flüssigen Phase Löcher mit einer beliebigen Form und/oder Spalten sind.

**8.** Modul nach einem der Ansprüche 1 bis 7, bei dem der Strömungsabschnitt (2) der flüssigen Phase, die dem Verteilerteller (P) am nächsten liegt, in einem ausreichenden Abstand vom. Teller (P) liegt, damit sich ein Flüssigkeitspegel über dem Teller (P) bildet.

**9.** Modul nach einem der Ansprüche 1 bis 8, bei dem der Kamin einen Teil über dem Verteilerteller (P) und einen Teil unter dem Verteilerteller (P) umfasst.

**10.** Gehäuse, das nahe seines oberen Endes einen Einlass für ein flüssiges Fluid und ein zweites gasförmiges Fluid umfasst, wobei es mindestens ein Granulat-Festbett und über dem Bett ein Modul nach einem der Ansprüche 1 bis 9 enthält, **dadurch gekennzeichnet, dass** es über dem Modul mindestens einen seitlichen Einlass für ein drittes, vorzugsweise gasförmiges Fluid umfasst, gleich oder verschieden von dem genannten ersten oder zweiten Fluid.

**11.** Gehäuse nach Anspruch 10, in dem das dritte Fluid ein Fluid zum Austausch von Wärme- und/oder Material ist, mit mindestens einem der genannten ersten oder zweiten Fluide.

**12.** Gehäuse nach Anspruch 10 oder 11 zur Durchführung der katalytischen Reaktion, wobei das Granulatbett (oder die Granulatbetten) ein Katalysatorbett ist.

**13.** Gehäuse nach einem der Ansprüche 10 bis 14 zur Durchführung der katalytischen Reaktion, wobei einer der Reagenzien Wasserstoff ist.

**Claims**

**1.** A polyfunctional sub-assembly ensuring contact, material distribution and heat and/or material exchange of at least one gas phase, at least a portion of which is hydrogen, and at least one liquid phase, for a vessel containing at least one bed of granular solid, said phases being in overall downflow mode and traversing said bed of granular solid, said sub-assembly comprising at least one distributor tray (P) located above one of said beds of granular solid, comprising a plurality of downcomers (1) each surmounted by at least one jet disturber device and each having in its upper portion at least one cross section of flow (22) for entry of the major portion of said gas phase into said downcomer and, between said upper portion and the lower portion of said downcomer above tray (P), at least one cross section of flow (2) for entry of the major portion of said liquid phase into said downcomer, and in its lower portion at least one cross section of flow (23) for the two-phase or poly-phase mixture formed in said downcomer for distributing it over the bed of granular solid located below said lower portion, the sub-assembly being **characterized in that** each downcomer contains at least one packing between its upper portion and its lower portion constituted by at least one element the cross section for flow of which is essentially transverse to the downcomer axis, said element extending across the whole of the transverse cross section of the downcomer in the circulation zone and being constituted by cells through which said liquid and said gas phase pass, said cells orientating the circulation of fluids inside said downcomer in a substantially radial direction..

**2.** A sub-assembly according to claim 1, comprising at least one means for dispersing the two-phase or poly-phase mixture formed in said downcomer located close to the cross section of flow (23) of the lower portion of each downcomer.

**3.** A sub-assembly according to claim 2, in which each downcomer contains at least two non contiguous packings, the last packing, located close to the cross section of flow (23) of the lower portion of each downcomer, carrying out said function of dispersing the two-phase or poly-phase mixture formed in said downcomer.

**4.** A sub-assembly according to claim 3, in which the last packing, located close to the cross section of flow (23) of the lower portion of each downcomer carrying out said function of dispersing the two-phase or poly-phase mixture formed in said downcomer, comprises a portion that is internal to the downcomer and a portion that is external to said downcomer.

**5.** A sub-assembly according to claim 2, in which the means carrying out the dispersion of the two-phase or poly-phase mixture formed in the downcomer is a jet disturber device with a controlled porosity located below and close to the cross section of flow (23) of the lower portion of said downcomer.

**6.** A sub-assembly according to any one of claims 1 to 5, in which the downcomer comprises at least two cross sections of flow (2) of the liquid phase located at different levels above the distributor tray (P) and below the cross section of flow (22) closest to said distributor tray (P).

**7.** A sub-assembly according to any one of claims 1 to 6, in which the cross sections of flow of the liquid phase are apertures of any shape and/or slots.

**8.** A sub-assembly according to any one of claims 1 to 7, in which the cross section of flow (2) of the liquid phase closest to the distributor tray (P) is located at a sufficient distance from said tray (P) for a level of liquid to be established above said tray (P).

9. A sub-assembly according to any one of claims 1 to 8, in which the downcomer comprises a portion above the distributor tray (P) and a portion below the distributor tray (P).

10. A vessel comprising close to its upper end an inlet for a first liquid fluid and for a second gaseous fluid, containing at least one bed of granular solid there being mounted above said bed a sub-assembly according to any one of claims 1 to 9, **characterized in that** above said sub-assembly, said vessel comprises at least one side inlet for a third fluid, preferably a gas, which may be identical to or different from said first or second fluid.

11. A vessel according to claim 10, in which said third fluid is a fluid for heat exchange and/or material exchange with at least one of said first or second fluids.

12. A vessel according to claim 10 or claim 11, for carrying out a catalytic reaction in which the bed (or heds) of granular solid is a catalyst bed.

13. A vessel according to any one of claims 10 to 14 for carrying out a catalytic reaction in which one of the reactants is hydrogen.

**Figure 1**

**Figure 2**

(3)

(22)

(1)

(5)

(2)

(P)

(4)

(6)

(23)

Figure 3

(3)

(22)

(1)

(5)

(2)

(P)

(4)

(23)

(7)

Figure 4

Figure 5a

Figure 5b

Figure 6

Figure 7